# EUROPÄISCHE PATENTANMELDUNG

(11) **EP 3 809 029 A1**
(43) Veröffentlichungstag der Anmeldung: **21.04.2021**
(21) Anmeldenummer: 19203197.9
(22) Anmeldetag: 15.10.2019
(51) Int. Cl.: F16L 5/04, F16L 5/10, H02G 3/22

(54) **LEITUNGSDURCHFÜHRUNG**

(71) Anmelder: Hilti Aktiengesellschaft, 9494 Schaan (LI)
(72) Erfinder: Nguyen, Huu Toan, 9453 Eichberg (CH); Hakenholt, Christoph, 6800 Feldkirch (AT)
(74) Vertreter: Hilti Aktiengesellschaft Corporate Intellectual Property

(57) **Zusammenfassung**

Die Erfindung betrifft eine Leitungsdurchführung (1) zum Durchführen wenigstens einer Leitung durch ein Bauteil mit einem Hüllrohr (2), wenigstens einem innerhalb des Hüllrohrs (2) gelagerten und gegenüber dem Hüllrohr (2) drehbaren Element (9) und mit einem als flexibler Schlauchkörper ausgebildeten, innerhalb des Hüllrohrs (2) und dem Element (9) angeordneten Dichtelement, wobei der Schlauchkörper in einem axialen Endbereich (5) mit dem Element (9) verbunden ist und durch eine Drehbewegung zwischen einer Schließposition, in der der Schlauchkörper einen Durchgang durch den Schlauchkörper zumindest teilweise verschließt, und einer Öffnungsposition, in der ein Durchgang durch den Schlauchkörper zumindest teilweise freigegeben ist, verlagerbar ist. Es ist ein in Längsrichtung (L) gegenüber dem Hüllrohr (2) verlagerbares Führungselement (41) vorgesehen, welches mit einer Führungsbahn (40) des Elements (9) zusammenwirkt, wobei die Führungsbahn (40) des Elements (9) spiralförmig ausgeführt ist, so dass eine Verlagerung des Führungselements (41) in Längsrichtung (L) zu einer Verdrehung des Elements (9) gegenüber dem Hüllrohr (2) führt.

## Beschreibung

Die Erfindung betrifft eine Leitungsdurchführung zum Durchführen wenigstens einer Leitung durch ein Bauteil mit einem Hüllrohr, einem innerhalb des Hüllrohrs gelagerten und gegenüber dem Hüllrohr drehbaren Element und mit einem als flexibler Schlauchkörper ausgebildeten und innerhalb des Hüllrohrs und dem Element angeordneten Dichtelement gemäß der im Oberbegriff von Patentanspruch 1 näher beschriebenen Art.

Derartige Leitungsdurchführungen dienen dem Durchführen von Leitungen, wie z. B. Rohrleitungen, Kabeln oder Kabelkanälen, durch Bauteile, wie z. B. durch Decken oder Wände und werden beim Erstellen eines Bauteils, wie einer Wand oder einer Decke, oder nachträglich in dieses eingebaut. Insbesondere können die Leitungsdurchführungen in Betondecken oder - wände eingegossen werden oder es können nachträglich Durchführungen in das Bauteil gebohrt, gesägt oder geschnitten werden. Vorzugsweise sind derartige Leitungsdurchführungen mit einer Brandschutzfunktion ausgerüstet. Vom Zeitpunkt des Einbaus bzw. Eingiessens in das Bauteil über die Installation der Leitung durch die Leitungsdurchführung bis hin zur Fertigstellung des Gebäudes besteht daher bereits ein Brandschutz. Wichtig bei derartigen Leitungsdurchführungen ist deren interne Dichtigkeit gegen gasförmige Medien, wie z. B. Rauchgas.

Aus der DE 10 2006 035 475 A1 ist eine Leitungsdurchführung bekannt, die in einem Bauteil, wie z. B. einer Betonwand, einbringbar ist. Die Leitungsdurchführung weist ein aus zwei Teilen bestehendes Hüllrohr und einen entlang seiner Längsachse verdrehbaren Schlauchkörper auf, an dessen erstem und zweitem axialen Schlauchende jeweils ein erstes respektive ein zweites Ringteil angeordnet sind, die als Stützelemente für den Schlauchkörper fungieren. Der Schlauchkörper ist an seinen beiden axialen Schlauchenden um insgesamt wenigstens 45°, vorzugsweise wenigstens 90°, gegeneinander verdrehbar, so dass ein Durchgang durch den Schlauchkörper verschließbar bzw. ein Innendurchmesser des Schlauchkörpers im Wesentlichen auf die Größe Null reduziert werden kann.

Eine Überführung des Schlauchkörpers von einer Schließposition, in der der Durchgang durch den Schlauchkörper verschlossen ist, und einer Öffnungsposition, in der ein Durchgang durch den Schlauchkörper zur Anordnung von Leitungen und Kabeln zumindest teilweise freigegeben ist, ist dabei nachteilafterweise aufwändig.

Der vorliegenden Erfindung liegt daher die Aufgabe zugrunde, eine Leitungsdurchführung zum Durchführen von Leitungen durch Bauteile bereitzustellen, wobei die Leitungsdurchführung anwenderfreundlich zwischen einer Schließposition und einer Öffnungsposition verlagerbar ist.

Es wird somit eine Leitungsdurchführung zum Durchführen wenigstens einer Leitung durch ein Bauteil mit einem Hüllrohr, einem innerhalb des Hüllrohrs gelagerten und gegenüber dem Hüllrohr drehbaren Element und mit einem als flexibler Schlauchkörper ausgebildeten, innerhalb des Hüllrohrs und dem Element angeordneten Dichtelement, vorgeschlagen, wobei der Schlauchkörper in einem axialen Endbereich mit dem Element verbunden ist und durch eine Drehbewegung zwischen einer Schließposition, in der der Schlauchkörper einen Durchgang durch den Schlauchkörper zumindest teilweise verschließt, und einer Öffnungsposition, in der ein Durchgang durch den Schlauchkörper zumindest teilweise freigegeben ist, verlagerbar ist.

Erfindungsgemäß wird vorgeschlagen, dass ein in Längsrichtung gegenüber dem Hüllrohr verlagerbares Führungselement vorgesehen ist, welches mit einer Führungsbahn des Elements zusammenwirkt, wobei die Führungsbahn des ersten Elements spiralförmig ausgeführt ist, so dass eine Verlagerung des Führungselements in Längsrichtung zu einer Verdrehung des ersten Elements gegenüber dem Hüllrohr führt.

Mit der erfindungsgemäßen Lösung ist eine konstruktiv einfache Leitungsdurchführung bereitgestellt, die auf einfache Weise geführt zwischen der Schließposition und der Öffnungsposition verlagerbar ist. Hierbei wird eine translatorische Bewegung des Führungselements in eine zu erzielende Drehwegung des Schlauchkörpers umgewandelt.

Das Hüllrohr kann beispielsweise einen kreisförmigen, einen elliptischen, einen quadratischen, einen rechteckigen, einen dreieckigen, einen mehreckigen oder dergleichen Querschnitt aufweisen.

Bei einer konstruktiv einfach umzusetzenden Ausführung nach der Erfindung ist die Führungsbahn durch wenigstens eine Führungsschiene gebildet, in die das Führungselement mit wenigstens einer Ausnehmung eingreift. Vorzugsweise greift das Führungselement mit mehreren, insbesondere zwei Ausnehmungen jeweils in eine Führungsbahn des Elements ein. Hierdurch ist eine bessere Führung geschaffen.

Wenn eine mit dem Führungselement zusammenwirkende Federeinrichtung vorgesehen ist, die das Führungselement derart mit einer Kraft beaufschlagt, dass das Führungselement das Element in Richtung einer Endposition bewegt, in der der Schlauchkörper seine Schließposition einnimmt, ist auf einfache Weise sicherstellbar, dass die Leitungsdurchführung in einem Grundzustand ohne manuelle Betätigung die Schließposition einnimmt. Unabhängig von einer Anzahl und einer Größe von durch den Schlauchkörper durchgeführten Leitungen ist hierbei sichergestellt, dass die Leitungsdurchführung in dem Grundzustand seine Schließposition einnimmt. Ein Durchtritt von Gas durch die Leitungsdurchführung ist dabei unabhängig von der Anzahl und einer Größe der durch die Leitungsdurchführung geführten und innerhalb des Schlauchkörpers angeordneten Leitungen sicher verhindert. Der Schlauchkörper wird nach einer anwenderseitigen Betätigung durch das Vorsehen der Federeinrichtung zuverlässig in die Schließposition überführt, so dass Anwenderfehler sicher verhinderbar sind.

Die Federeinrichtung kann bei einer konstruktiv einfachen Ausführung der Leitungsdurchführung als Zugfeder ausgeführt sein, die vorzugsweise einerseits mit Element und andererseits mit dem Führungselement zusammenwirkt. Alternativ oder zusätzlich hierzu kann die Federeinrichtung als Spiralfeder bzw. Torsionsfeder ausgeführt sein. Das Vorsehen einer Spiralfeder oder Torsionsfeder, die außerhalb oder innerhalb des Hüllrohres angeordnet sein kann, ist eine günstige Krafteinleitung erzielbar und auf einfache Weise sicherstellbar, dass die Leitungsdurchführung ohne anwenderseitige Betätigung und/oder durch anwenderseitige Krafteinbringung durch das Vorsehen einer entsprechenden Federsteifigkeit der Torsionsfeder sicher in die Schließposition überführbar ist.

Um eine Überführung des Schlauchkörpers in seine Schließposition besonders sicher durchführen zu können, kann in einem vorzugweise in Längsrichtung des Schlauchkörpers mittigen Bereich des Schlauchkörpers eine Einrichtung vorgesehen sein, die den Schlauchkörper in Richtung seiner Schließposition vorspannt. Die vorzugsweise elastische Einrichtung umgreift insbesondere den Schlauchkörper vollständig und überführt diesen in unbelastetem Zustand in seine Schließposition. Andererseits kann der Schlauchkörper entgegen einer von der Einrichtung auf den Schlauchkörper wirkenden Kraft durch die Aufbringung einer äußeren Kraft in seine Öffnungsposition überführt werden.

Die Einrichtung ist bei einer konstruktiv einfachen Ausbildung der Erfindung als Federeinrichtung, als elastisches Band, als Gummiband oder dergleichen ausgeführt.

Um den Zustand der Leitungsdurchführung auf einfache Weise überwachen zu können, kann eine Sensoreinrichtung vorgesehen sein, mittels der insbesondere die Schließposition und/oder die Öffnungsposition des Schlauchkörpers ermittelbar ist. Mittels der Sensoreinrichtung ist der Zustand des Schlauchkörpers durch den Einsatz entsprechender, insbesondere drahtloser Mittel auch ohne visuelle Überprüfung sicher ermittelbar.

Die Sensoreinrichtung ist bei einer vorteilhaften Ausführungsform als Kontaktsensor, insbesondere als RFID-Sensor, oder als berührungsloser Sensor ausgeführt, wobei grundsätzlich vielfältige Bauformen von Sensoren zum Einsatz kommen können.

Bei einer vorteilhaften Ausführungsform der Leitungsdurchführung nach der Erfindung ist eine Verlagerungseinrichtung vorgesehen, mittels welcher das Führungselement in Längsrichtung der Leitungsdurchführung verlagerbar und der Schlauchkörper zwischen seiner Schließposition und seiner Öffnungsposition verlagerbar ist. Auf diese Weise ist eine von einem Benutzer einfach durchzuführende Verlagerung des Schlauchkörpers beispielsweise auch entgegen einer Federkraft einer Federeinrichtung von der Schließposition in die Öffnungsposition umsetzbar.

Eine Überführung der Leitungsdurchführung zwischen der Schließposition und der Öffnungsposition ist besonders einfach durchführbar, wenn Verlagerungseinrichtung ein Hebelelement aufweist, welches gegenüber dem Hüllrohr verschwenkbar ist.

Bei einer besonders nutzerfreundlichen Ausführung der Erfindung ist eine Arretiereinrichtung vorgesehen, mittels welcher das Hebelelement in wenigstens einer Endposition und insbesondere in beiden Endpositionen gegenüber dem Hüllrohr festlegbar ist. Hierdurch ist insbesondere bei einer mit einer Federeinrichtung ausgeführten Leitungsdurchführung durch die Arretiereinrichtung ein beidhändiges Arbeiten zur Durchführung von Leitungen und Kabeln in der Öffnungsposition ermöglicht.

Bei einer vorteilhaften Ausführungsform der Leitungsdurchführung ist ein weiteres, in Längsrichtung gegenüber dem Hüllrohr verlagerbares Führungselement vorgesehen ist, welches mit einer weiteren Führungsbahn eines weiteren Elements zusammenwirkt, wobei die weitere Führungsbahn des weiteren Elements spiralförmig ausgeführt ist, so dass eine Verlagerung des weiteren Führungselements in Längsrichtung zu einer Verdrehung des weiteren Elements führt. Das weitere Element, das weitere Führungselement und die weitere Führungsbahn sind dabei insbesondere vergleichbar zu dem Element, dem Führungselement und der Führungsbahn ausgeführt, wobei das Element und das weitere Element vorzugsweise unabhängig voneinander gegenüber dem Hüllrohr drehbar in dem Hüllrohr gelagert sind. Der Schlauchkörper ist in einem dem Element abgewandten weiteren Endbereich vorzugsweise drehfest mit dem weiteren Element verbunden. Durch diese Ausführung ist der Schlauchkörper in montiertem Zustand von beiden Seiten bzw. Endbereichen zwischen der Schließposition und der Öffnungsposition verlagerbar und Leitungen sind durch die Leitungsdurchführung führbar. Dies ist insbesondere bei in einer Wand montiertem Zustand der Leitungsdurchführung von Vorteil.

Der Schlauchkörper ist vorzugsweise sehr dünn ausgeführt und weist insbesondere eine Materialstärke von 0,01 mm bis 2 mm auf. Der Schlauchkörper kann in seinem mittleren Bereich eine Taillierung aufweisen. Hierdurch wird der maximal mögliche Öffnungsquerschnitt begrenzt, so dass bei nicht mit einer Leitung belegter Leitungsdurchführung der offene Querschnitt im geöffneten Zustand nicht unerwünscht groß ist.

Der Schlauchkörper ist vorzugsweise mit einem gasdichten Material, wie beispielsweise einem Gewebe, Gummi, Folienmaterial oder dergleichen ausgeführt, das gleichzeitig elastisch ist.

Bei einer vorteilhaften Ausführung der Leitungsdurchführung ist innen an dem Schlauchkörper ein elastisches Material, wie z. B. ein Schaumstoff- oder Gummimaterial, angeordnet. Hierdurch kann die Dichtigkeit zwischen einer durch den Schlauchkörper hindurchgeführten Leitung und dem Schlauchkörper weiter verbessert werden.

Bei einer vorteilhaften Ausführung einer Leitungsdurchführung nach der Erfindung ist ein Abschottmittel vorgesehen. Das Abschottmittel kann beispielsweise als ein Ring aus intumeszierendem Material ausgeführt sein und stellt den Brandschutz der Leitungsdurchführung sicher. Das Abschottmittel kann beispielsweise mit dem Hüllrohr oder dem Element verbunden sein.

Weitere Vorteile ergeben sich aus der folgenden Figurenbeschreibung. In den Figuren sind Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine Schnittansicht einer Leitungsdurchführung mit einem Hüllrohr und zwei in dem Hüllrohr angeordneten Elementen, wobei die Elemente jeweils in einer Schließposition angeordnet sind, wobei ein Schlauchkörper nicht ersichtlich ist;
- Fig. 2: eine Längsschnittansicht der Leitungsdurchführung gemäß Fig. 1, wobei ein in einer Führungsschiene des Hüllrohrs translatorisch gegenüber dem Hüllrohr verlagerbares Führungselement ersichtlich ist, welches in Eingriff mit einer Führungsschiene des Elements steht; und
- Fig. 3: eine Fig. 1 entsprechende Ansicht der Leitungsdurchführung, mit der Leitungsdurchführung in einer Öffnungsposition;
- Fig. 4: eine Fig. 2 entsprechende Längsschnittansicht der Leitungsdurchführung in der Öffnungsposition;
- Fig. 5: eine dreidimensionale Ansicht der Leitungsdurchführung ohne das Hüllrohr und den Schlauchkörper;
- Fig. 6: eine dreidimensionale Ansicht einer Hälfte des Hüllrohrs der Leitungsdurchführung gemäß Fig. 1 in Alleinstellung;
- Fig. 7: eine vereinfachte Längsschnittdarstellung einer alternativ ausgeführten Leitungsdurchführung; und
- Fig. 8: eine vereinfachte Querschnittsdarstellung der Leitungsdurchführung gemäß Fig. 7.

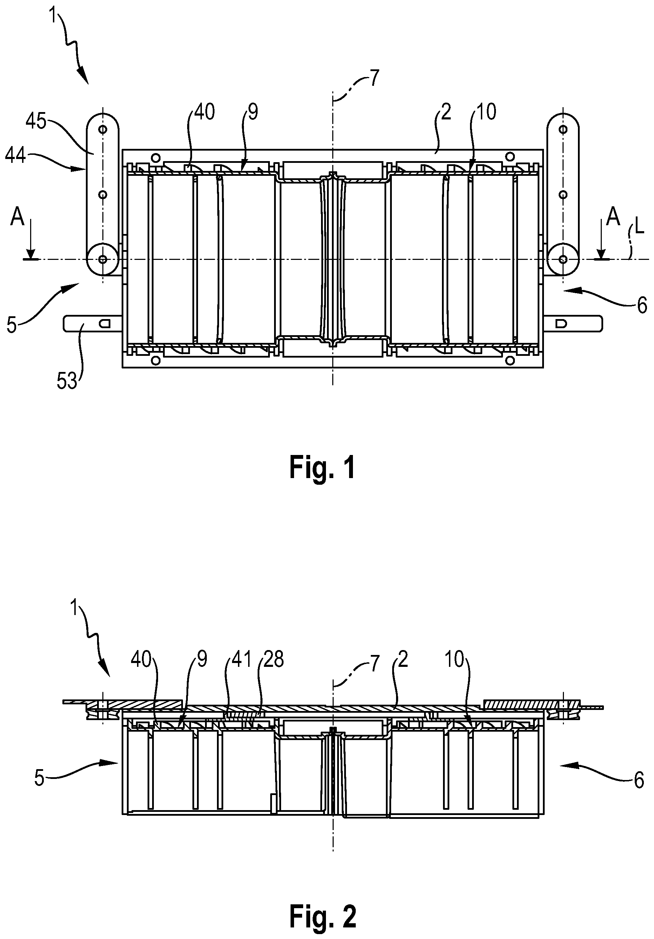

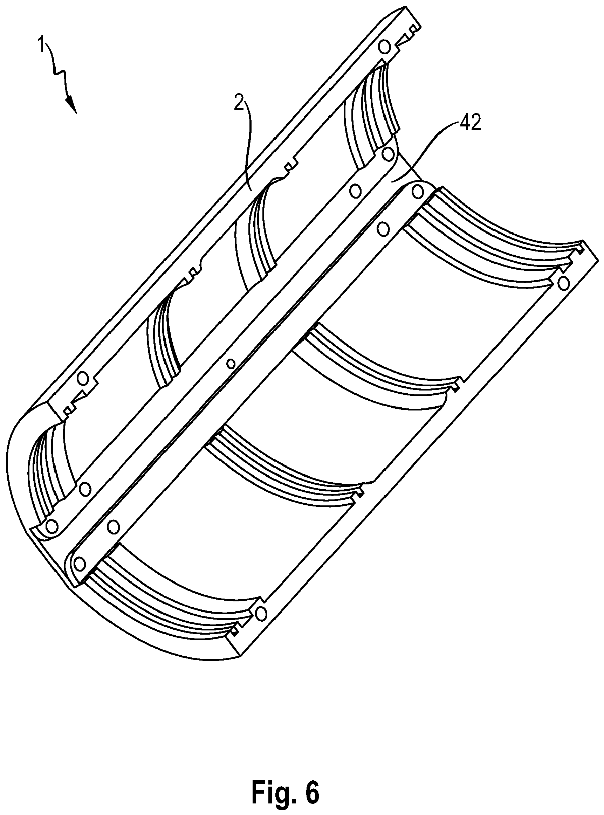

Fig. 1 bis Fig. 6 zeigen eine Ausführungsform einer Leitungsdurchführung 1 mit einem formstabilen Hüllrohr 2. Die Leitungsdurchführung 1 kann dabei nachträglich in eine Öffnung in einem Bauteil, beispielsweise einer Betonwand, eingebracht werden oder bei der Erstellung des Bauteils in dieses eingearbeitet werden.

Die Leitungsdurchführung 1 ist vorliegend im Wesentlichen symmetrisch zu einer Mittelquerebene 7, die senkrecht zu einer Längsachse L der Leitungsdurchführung 1 angeordnet ist, ausgeführt, wobei in Längsrichtung L zwei Endbereiche 5, 6 der Leitungsdurchführung 1 im Wesentlichen vergleichbar zueinander ausgebildet sind. Der erste Endbereich 5 wird im Folgenden stellvertretend für den zweiten Endbereich 6 beschrieben.

Die Leitungsdurchführung 1 weist weiterhin ein nicht näher ersichtliches, sich in Längsrichtung L erstreckendes Dichtelement auf, welches hier als flexibler, um die Längsachse L als Drehachse verdrehbarer Schlauchkörper bzw. als Schlauchelement ausgeführt ist. Das Schlauchelement ist in seinen Endbereichen jeweils drehfest mit einem Element 9 bzw. 10 verbunden, welche hier jeweils hülsenförmig ausgeführt sind, jeweils separat drehbar und axial fixiert in dem Hüllrohr 2 gelagert sind und gegeneinander drehbar sind.

Das Schlauchelement besteht dabei beispielsweise aus einem flexiblen und/oder elastischen, dünnwandigen und gasdichten Gummi- Gewebe- oder Folienmaterial und ist innen mit einem elastischen Material, wie beispielsweise einem Schaumstoff- oder Gummimaterial versehen. Als dünnwandig wird hierbei verstanden, dass die Wandstärke des Materials vorliegend etwa 0,01 mm bis ca. 2 mm beträgt. Das elastische Material kann beispielsweise in Form einer durchgehenden Beschichtung innen am Schlauchelement angeordnet sein oder nur bereichsweise beispielsweise in Form von in Längsrichtung des Schlauchelements angeordneten Streifen oder Rippen. Das Schlauchelement kann eine Taillierung aufweisen, die im in dem Hüllrohr 2 der Leitungsdurchführung 1 eingebauten Zustand einen Innendurchmesser aufweist, der kleiner als ein maximaler Durchmesser des Schlauchelements, insbesondere im Bereich der Anbindung an die Elemente 9 bzw. 10 ist. Der Innendurchmesser des Schlauchelements beschreibt dabei eine durchschnittliche Öffnungsweite des Schlauchelements, so dass auch Schlauchelemente mit einem ovalen oder polygonalen Querschnitt, also nicht kreisförmigen Querschnitten nach dieser Definition einen Innendurchmesser aufweisen. Das Schlauchelement bzw. der Schlauchkörper ist an seinen beiden axialen Schlauchenden vorliegend um insgesamt wenigstens 45°, vorzugsweise wenigstens 90°, gegeneinander verdrehbar, wobei das Schlauchelement zwischen einer Schließposition, in der der Innendurchmesser des Schlauchelements im Wesentlichen auf die Grösse Null reduziert ist und einer Öffnungsposition, in der ein Durchgang durch das Schlauchelement zur Anordnung von Kabeln und Leitungen freigegeben ist, verlagerbar ist.

Das Schlauchelement ist in den Endbereichen vorzugsweise vollumfänglich mit dem Element 9 bzw. dem weiteren Element 10 verbunden, wobei die Elemente 9, 10 die Endbereiche des Schlauchelements vorliegend umfangsseitig umgeben.

Das Element 9 weist an seiner nach außen weisenden Seite wenigstens eine, vorzugsweise zwei als Führungsschiene 40 ausgeführte Führungsbahnen auf, die sich hier im Wesentlichen spiralförmig von einem Endbereich des Elements 9 zu einem zweiten Endbereich des Elements 9 erstrecken. Es ist weiterhin ein Führungselement 41 vorgesehen, welches einerseits translatorisch in einer Führungsschiene 42 des Hüllrohrs 2 gelagert ist und andererseits hier über zwei Ausnehmungen 47 mit zwei Führungsschienen 40 des Elements 9 zusammenwirkt.

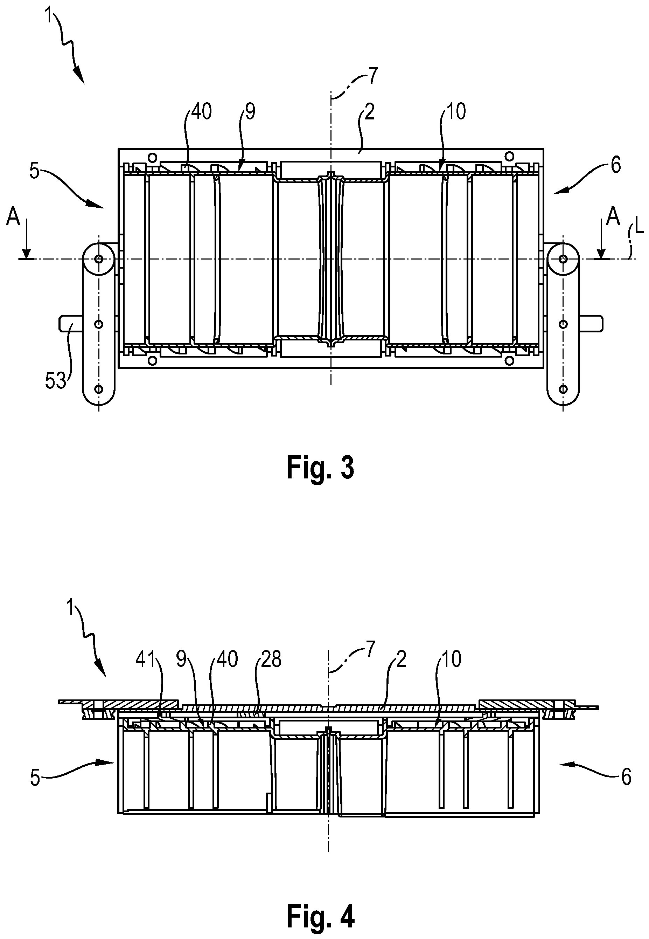

Es ist weiterhin eine mit einem Hebelelement 45 ausgeführte Verlagerungseinrichtung 44 vorgesehen, wobei das Hebelelement 45 zur translatorischen Verlagerung des Führungselements 41 in der Führungsschiene 42 ausgeführt ist. In Fig. 1 und Fig. 2 ist das Hebelelement 45 in einer ersten Endposition angeordnet, in der das Führungselement 41 sich in einer ersten Endposition der Führungsschienen 40 befindet. Diese Position entspricht der Schließstellung des Schlauchelements. Fig. 3 und Fig. 4 zeigen das Hebelelement 45 in einer gegenüber der ersten Endposition um vorliegend etwa 180°° verschwenkten zweiten Endposition, in der das Führungselement 41 in der Führungsschiene 42 in eine zweite Endposition verlagert ist. Vorliegend ist eine Arretiereinrichtung 53 vorgesehen, welche zur Festlegung des Hebelelements 45 in seiner zweiten Endposition vorgesehen ist. Hierdurch ist eine unerwünschte Rückbewegung des Hebelelements 45 in seine erste Endposition auch ohne eine Betätigung des Hebelelements 45 durch einen Anwender sicher verhindert.

Bei einer Überführung des Führungselements 41 zwischen der ersten Endposition und der zweiten Endposition wird durch das Zusammenwirken des Führungselements 41 mit den Führungsschienen 40 das Element 9 um die Längsachse L verdreht, wobei das Schlauchelement hierbei von seiner Schließposition in seine Öffnungsposition verlagert wird.

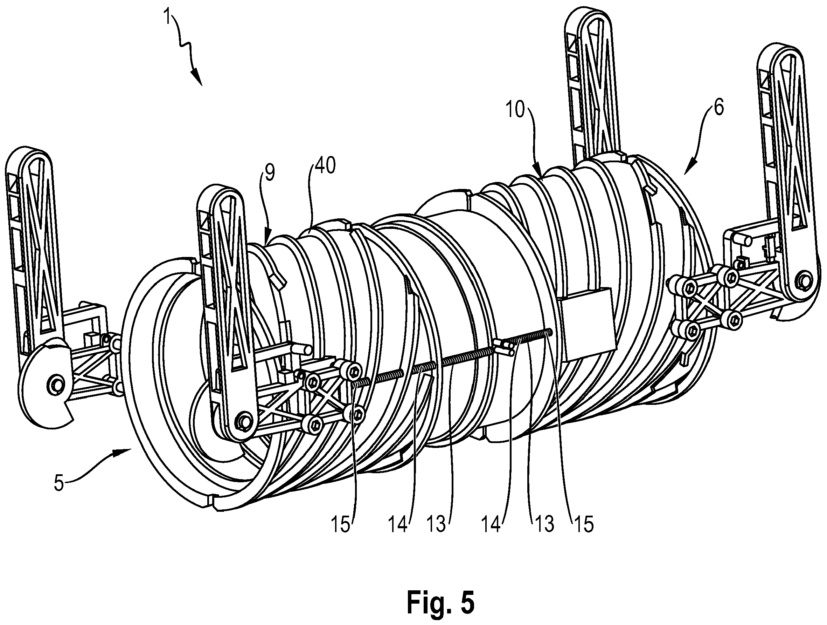

Wie in Fig. 5 näher ersichtlich ist, ist vorliegend eine als Zugfeder ausgeführte Federeinrichtung 13 vorgesehen, welche in einem ersten Endbereich 14 mit einem der Mittelquerebene 7 zugewandten Endbereich des Elements 9 und in einem dem ersten Endbereich 14 abgewandten zweiten Endbereich 15 mit dem Führungselement 41 verbunden ist. Die Zugfeder 13 beaufschlagt das Führungselement 41 mit einer Kraft, die das Führungselement 41 in Richtung seiner in Fig. 1 und Fig. 2 gezeigten Position, die einer Schließposition der Leitungsdurchführung 1 entspricht, beaufschlagt.

Um in der Schließposition auf besonders sichere Weise gewährleisten zu können, dass der Durchgang durch das Schlauchelement vorzugsweise vollständig verschlossen ist, kann in einem vorzugsweise der Mittelquerebene 7 zugewandten Bereich oder im Bereich der Mittelquerebene 7 eine vorzugsweise elastische Einrichtung das Schlauchelement beispielsweise vollständig umfangsseitig umfassen, wobei die Einrichtung den Schlauchkörper mit einer den Schlauchkörper in seine Schließposition drückenden Kraft beaufschlagt. Die Einrichtung kann beispielsweise als Federeinrichtung, elastischen Band oder Gummiband ausgeführt sein.

Um den Zustand der Leitungsdurchführung 1, d. h., ob sich das Schlauchelement in der Schließposition befindet, insbesondere auch von einem von der Leitungsdurchführung 1 entfernten Ort feststellen zu können, kann eine hier nur schematisch gezeigte Sensoreinrichtung 28 vorgesehen sein. Die Sensoreinrichtung 28 ist hier als Kontaktsensor in Form eines RFID-Sensor ausgeführt, wobei Signale von der Sensoreinrichtung 28 drahtgebunden oder vorzugsweise drahtlos an eine externe Einrichtung, wie beispielsweise ein Mobiltelefon oder einen Server, übermittelt werden, so dass von diesen aus der Zustand der Leitungsdurchführung 1 überwachbar ist.

Die Leitungsdurchführung 1 kann weiterhin ein hier nicht näher gezeigtes Abschottmittel aufweisen, das beispielsweise mit dem Hüllrohr 2 oder dem Element 9 verbunden sein kann. Das Abschottmittel 19 ist beispielsweise ein Ring aus einem intumeszierenden Material und stellt den Brandschutz der Leitungsdurchführung 1 sicher.

Durch die symmetrische Ausführung der Leitungsdurchführung 1 kann das Schlauchelement vorteilhafterweise von beiden Endbereichen 5, 6 jeweils von der Schließposition in die Öffnungsposition und umgekehrt überführt werden. Dies ist insbesondere in montiertem Zustand der Leitungsdurchführung 1 vorteilhaft.

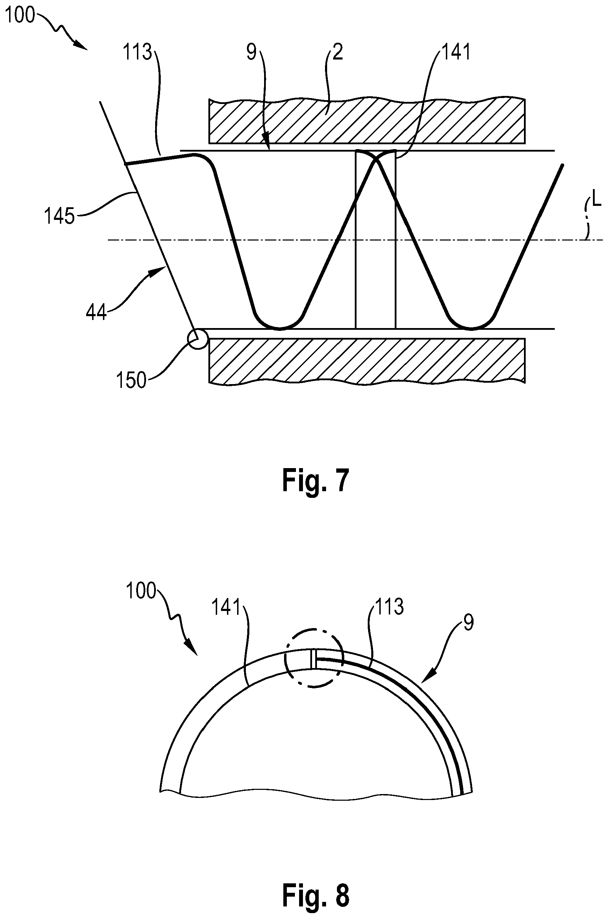

In Fig. 7 und Fig. 8 ist eine weitere Ausführungsform einer Leitungsdurchführung 100 nach der Erfindung gezeigt. Im Folgenden wird lediglich auf die Unterschiede zwischen der Leitungsdurchführung 100 und der Leitungsdurchführung 1 eingegangen und ansonsten auf die Ausführungen zur Leitungsdurchführung 1 verwiesen.

Anstelle der als Zugfeder ausgeführten Federeinrichtung 13 weist die Leitungsdurchführung 100 eine als Torsionsfeder ausgeführte Federeinrichtung 113 auf. Die Torsionsfeder 113 ist insbesondere im Bereich von spiralförmig in dem Hüllrohr 2 angeordneten Nuten angeordnet. Die Torsionsfeder 113 ist in einem ersten Endbereich mit dem Führungselement 41 und mit einem abgewandten zweiten Endbereich mit einem Hebelelement 145 der Verlagerungseinrichtung 44 verbunden.

Das Hebelelement 145 ist vorliegend in einem Drehgelenk 150 mit dem Hüllrohr 2 verbunden. Durch eine Verlagerung des Hebelelements 145 um das Drehgelenk 150 ist das Führungselement 41 in oben näher beschriebener Art und Weise in der Führungsschiene 145 verlagerbar.

Eine Federsteifigkeit der Torsionsfeder 113 ist dabei insbesondere derart gewählt, dass durch eine externe Kraftaufbringung auf das Hebelelement 145 eine sichere Überführung der Leitungsdurchführung 100 in die Schließposition erreichbar ist.

Die Torsionsfeder 113 ist hierbei insbesondere als Draht, beispielsweise Metalldraht oder Teflondraht, ausgeführt.

## Patentansprüche

1. Leitungsdurchführung (1; 100) zum Durchführen wenigstens einer Leitung durch ein Bauteil mit einem Hüllrohr (2), wenigstens einem innerhalb des Hüllrohrs (2) gelagerten und gegenüber dem Hüllrohr (2) drehbaren Element (9) und mit einem als flexibler Schlauchkörper ausgebildeten, innerhalb des Hüllrohrs (2) und dem Element (9) angeordneten Dichtelement, wobei der Schlauchkörper in einem axialen Endbereich (5) mit dem Element (9) verbunden ist und durch eine Drehbewegung zwischen einer Schließposition, in der der Schlauchkörper einen Durchgang durch den Schlauchkörper zumindest teilweise verschließt, und einer Öffnungsposition, in der ein Durchgang durch den Schlauchkörper zumindest teilweise freigegeben ist, verlagerbar ist,
**dadurch gekennzeichnet,**
**dass** ein in Längsrichtung (L) gegenüber dem Hüllrohr (2) verlagerbares Führungselement (41; 141) vorgesehen ist, welches mit einer Führungsbahn (40) des Elements (9) zusammenwirkt, wobei die Führungsbahn (40) des Elements (9) spiralförmig ausgeführt ist, so dass eine Verlagerung des Führungselements (41; 141) in Längsrichtung (L) zu einer Verdrehung des Elements (9) gegenüber dem Hüllrohr (2) führt.

2. Leitungsdurchführung nach Anspruch 1, **dadurch gekennzeichnet, dass** die Führungsbahn (40) durch wenigstens eine Führungsschiene gebildet ist, in die das Führungselement (41; 141) mit wenigstens einer Ausnehmung (47) eingreift.

3. Leitungsdurchführung nach einem der Ansprüche 1 oder 2, **dadurch gekennzeichnet, dass** eine mit dem Führungselement (41; 141) zusammenwirkende Federeinrichtung (13) vorgesehen ist, die das Führungselement (41; 141) derart mit einer Kraft beaufschlagt, dass das Führungselement (41; 141) das Element (9) in Richtung einer Endposition bewegt, in der der Schlauchkörper seine Schließposition einnimmt.

4. Leitungsdurchführung nach Anspruch 3, **dadurch gekennzeichnet, dass** die Federeinrichtung (13; 113) als Zugfeder oder als Torsionsfeder ausgeführt ist.

5. Leitungsdurchführung nach einem der Ansprüche 1 bis 4, **dadurch gekennzeichnet, dass** eine direkt mit dem Schlauchkörper zusammenwirkende Einrichtung vorgesehen ist, die den Schlauchkörper in Richtung seiner Schließposition vorspannt.

6. Leitungsdurchführung nach Anspruch 5, **dadurch gekennzeichnet, dass** die Einrichtung als Federeinrichtung, elastisches Band oder Gummiband ausgeführt ist.

7. Leitungsdurchführung nach einem der Ansprüche 1 bis 6, **dadurch gekennzeichnet, dass** eine Sensoreinrichtung (28) vorgesehen ist, mittels der zumindest eine Schließposition des Schlauchkörpers ermittelbar ist.

8. Leitungsdurchführung nach Anspruch 7, **dadurch gekennzeichnet, dass** die Sensoreinrichtung (28) als Kontaktsensor, insbesondere als RFID-Sensor, oder als berührungsloser Sensor ausgeführt ist.

9. Leitungsdurchführung nach einem der Ansprüche 1 bis 8, **dadurch gekennzeichnet, dass** eine Verlagerungseinrichtung (44) vorgesehen ist, mittels welcher das Führungselement (41) in Längsrichtung (L) verlagerbar ist.

10. Leitungsdurchführung nach Anspruch 9, **dadurch gekennzeichnet, dass** die Verlagerungseinrichtung (44) ein Hebelelement (45; 145) aufweist, welches gegenüber dem Hüllrohr (2) verschwenkbar ist.

11. Leitungsdurchführung nach Anspruch 10, **dadurch gekennzeichnet, dass** eine Arretiereinrichtung (53) vorgesehen ist, mittels welcher das Hebelelement (45; 145) in wenigstens einer Endposition gegenüber dem Hüllrohr (2) festlegbar ist.

12. Leitungsdurchführung nach einem der Ansprüche 1 bis 11, **dadurch gekennzeichnet, dass** ein weiteres, in Längsrichtung (L) gegenüber dem Hüllrohr (2) verlagerbares Führungselement vorgesehen ist, welches mit einer weiteren Führungsbahn eines weiteren Elements (10) zusammenwirkt, wobei die weitere Führungsbahn des weiteren Elements (10) spiralförmig ausgeführt ist, so dass eine Verlagerung des weiteren Führungselements in Längsrichtung (L) zu einer Verdrehung des weiteren Elements (10) gegenüber dem Hüllrohr (2) führt.

13. Leitungsdurchführung nach einem der Ansprüche 1 bis 12, **dadurch gekennzeichnet, dass** der Schlauchkörper mit einem gasdichten Material ausgeführt ist.

14. Leitungsdurchführung nach einem der Ansprüche 1 bis 13, **dadurch gekennzeichnet, dass** innen an dem Schlauchkörper ein elastisches Material angeordnet ist.

15. Leitungsdurchführung nach einem der Ansprüche 1 bis 14, **dadurch gekennzeichnet, dass** ein Abschottmittel vorgesehen ist.
